Europäisches Patentamt

European Patent Office

Office européen des brevets

(19)

(11) Veröffentlichungsnummer: **0 175 939**
**B1**

(12) **EUROPÄISCHE PATENTSCHRIFT**

(45) Veröffentlichungstag der Patentschrift:
16.08.89

(51) Int. Cl.⁴: **F 01 P 11/10**

(21) Anmeldenummer: **85110633.6**

(22) Anmeldetag: **23.08.85**

(54) Fahrzeug mit einem Zuluftkanal für einen Ladeluftkühler.

(30) Priorität: **22.09.84 DE 8427918 U**

(43) Veröffentlichungstag der Anmeldung:
**02.04.86 Patentblatt 86/14**

(45) Bekanntmachung des Hinweises auf die Patenterteilung:
**16.08.89 Patentblatt 89/33**

(84) Benannte Vertragsstaaten:
**DE FR GB IT**

(56) Entgegenhaltungen:
**CH-A- 254 983**
**DE-C- 605 997**
**DE-C- 681 120**
**FR-A- 874 332**
**FR-A- 946 275**
**FR-A- 1 150 725**
**GB-A- 253 419**
**US-A- 2 123 991**
**US-A- 2 169 243**

(73) Patentinhaber: **Dr.Ing.h.c. F. Porsche**
**Aktiengesellschaft, Porschestrasse 42,**
**D-7000 Stuttgart 40 (DE)**

(72) Erfinder: **Reichel, Anton, Dipl.-Ing., Ditzenbrunner**
**Strasse 29, D-7257 Ditzingen 1 (DE)**
Erfinder: **Lohmann, Bernard, Dipl.-Ing. (FH), Lodberger**
**Strasse 71, D-4573 Loeningen (DE)**
Erfinder: **Kolb, Eugen, Ernst-Bloch-Weg 11,**
**D-7000 Stuttgart 30 (DE)**
Erfinder: **Hochkönig, Manfred, Dipl.-Ing. (FH),**
**Rechbergstrasse 2, D-7141 Moeglingen (DE)**
Erfinder: **Burst, Hermann, Dipl.-Ing.,**
**Telemannstrasse 10, D-7255 Rutesheim (DE)**
Erfinder: **Kretschmer, Helmut, Dipl.-Ing. (FH),**
**Hoehenstrasse 18, D-8752 Waldaschaff (DE)**

ACTORUM AG

**Beschreibung**

Die Erfindung bezieht sich auf ein Fahrzeug mit einer im Heck angeordneten Brennkraftmaschine nach dem Oberbegriff des Anspruchs 1.

Es sind Ausführungen bekannt (DE-PS 605 997 und FR-PS 1 150 725), bei denen zur Zuführung von Kühlluft im hinteren Bereich eines Kraftfahrzeuges Lufteintrittsöffnungen vorgesehen sind, die in einen vom Aufbau gebildeten Kanal einmünden und im Motorraum ausströmen bzw. durch eine besondere heckseitige Öffnung austreten. Dieser Kanal ist Teil der Aufbaustruktur des Fahrzeugs und fest und unlösbar in diesem integriert, was eine aufwendige Bauweise des Aufbaus bedingt. Ferner wird der Motorraum im Heck des Fahrzeugs durch den vom Aufbau gebildeten Kanal nachteilig so verkleinert und beschränkt, dass nur noch eine ungünstige Raumausnutzung möglich ist. Ferner ist die Zugänglichkeit des Kühlers erschwert, da dieser, wie nach der DE-PS 605 997, schwer zugänglich angeordnet ist. Ausserdem ist eine gute Abschirmung der Kühlluft gegen eine Erwärmung durch die Brennkraftmaschine nur unzureichend möglich.

Aus der US-A 2 169 243 ist ein Flugzeug mit einem einteiligen Zuluftkanal für einen Ladekühler bekannt, der benachbart des Motors innerhalb einer Motorverkleidung angeordnet und getrennt von diesen gehalten wird.

Aufgabe der Erfindung ist es, einen Zuluftkanal für einen Ladeluftkühler im Heck eines Kraftfahrzeuges zu schaffen, der gut zugänglich, einfach zu montieren ist und eine optimale Luftzuführung zum Ladeluftkühler sowie eine Ableitung der erwärmten Luft gewährleistet. Ausserdem soll der Ladeluftkühler einfach mit dem Zuluftkanal verbindbar sein und eine gute Zugänglichkeit aufweisen. Ferner soll eine optimale Abschirmung gegen Wärmeabstrahlung ermöglicht werden.

Diese Aufgabe wird erfindungsgemäss durch die kennzeichnenden Merkmale des Anspruchs 1 gelöst. Weitere vorteilhafte Merkmale beinhalten die Unteransprüche.

Die mit der Neuerung hauptsächlich erzielten Vorteile bestehen darin, dass ein Zuluftkanal geschaffen wird, der als separates Bauteil am Aufbau befestigt wird und kein Teil des Aufbaus bildet. Der Kanal wird nachträglich in das Radhaus eingebaut, wobei hierfür kein Raum geschaffen werden muss, da dieser schon zur Verfügung steht. Es wird durch diese Anordnung des Kanals eine Einengung des Motorraums vermieden, wodurch dieser günstig ausnutzbar ist. Der Zuluftkanal ist unabhängig vom Motor eingebaut und gut zugänglich angeordnet. Durch einen Kanalverlauf ohne wesentliche Abknickungen ist ein optimaler Strömungsdurchsatz vom Eintritt über den Ladeluftkühler bis zum Austritt der Luft gewährleistet.

Einbautoleranzen sind über die besonders gestaltete Verbindungshülse ausgleichbar, die zur Vermeidung von Strömungswiderständen eingezogen ist und deren Innenfläche bündig mit der Innenfläche des Stutzens und des Kanals verläuft.

Zur Montagevereinfachung des Ladeluftkühlers mit dem Zuluftkanal ist dieser mit einer endseitigen Ausformung entsprechend der Form des Ladeluftkühlers ausgeführt, so dass dieser passend aufgenommen wird.

In vorteilhafter Weise ist die Lufteintrittsöffnung in der Karosserie für den Zuluftkanal in einem Bereich vor dem Hinterrad und oberhalb der Raddrehachse vorgesehen. In diesem Bereich herrscht ein Überdruck, so dass eine maximale Luftzufuhr gewährleistet ist. Die Luftaustrittsöffnung ist hinter dem Hinterrad etwa in Höhe der Raddrehachse im Bugendbereich vorgesehen. Zur optimalen Abströmung der Luft ist die Luftaustrittsöffnung vorzugsweise im Unterdruckbereich in der Seitenwand des Aufbau bzw. teilweise im Heckbereich vorgesehen.

Ein Ausführungsbeispiel der Erfindung ist in der Zeichnung dargestellt und wird im folgenden näher beschrieben. Es zeigt:

Fig. 1 eine Seitenansicht eines Kraftfahrzeugs mit einem angedeuteten Zuluftkanal, Ladekühler und Luftein- und -austrittsöffnungen,

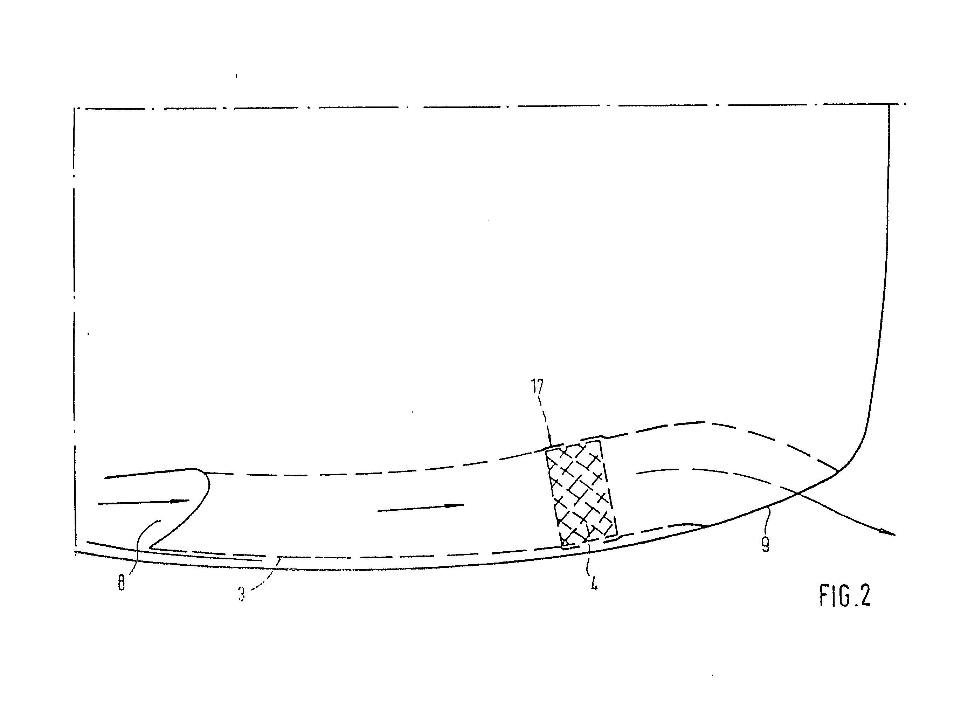

Fig. 2 eine Draufsicht zu Fig. 1 mit schematisch dargestelltem Zuluftkanal ohne näher dargestellter Verbindungshülse,

Fig. 3 eine Seitenansicht des hinteren Bereichs des Zuluftkanals mit Verbindungshülse,

Fig. 4 eine Seitenansicht des vorderen Bereichs des Zuluftkanals mit Ladeluftkühler,

Fig. 5 einen Schnitt durch eine Halterung nach der Linie V–V der Fig. 3,

Fig. 6 einen Schnitt durch einen Zuluftkanal mit Verbindungshülse nach der Linie VI–VI der Fig. 3 und

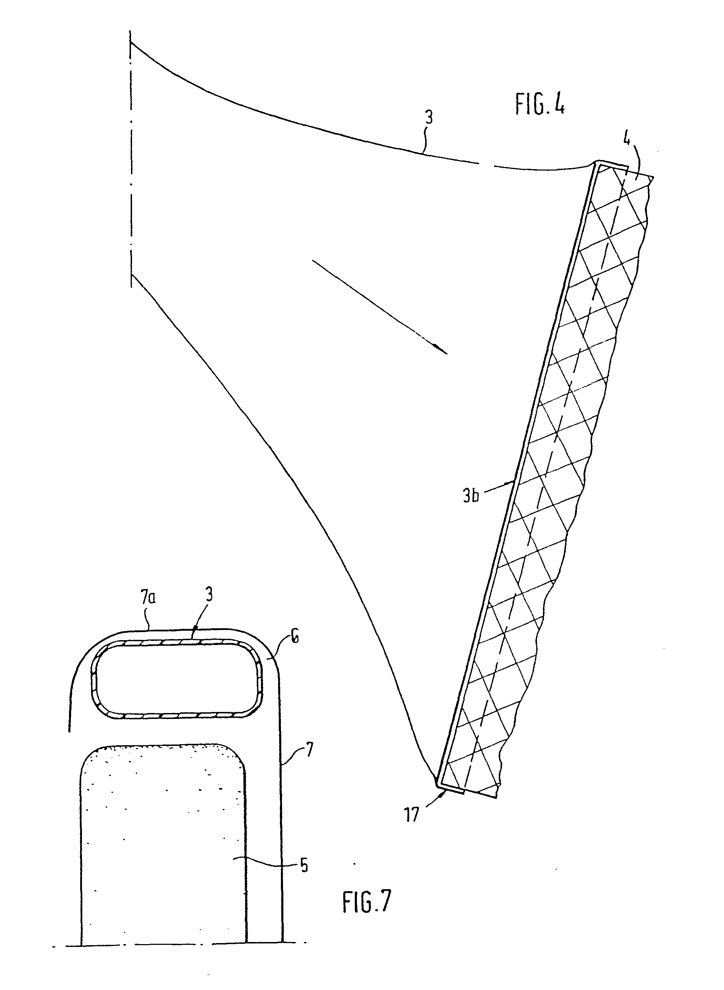

Fig. 7 einen Schnitt durch den Zuluftkanal im Bereich der Raddrehachse der Linie VII–VII der Fig. 1.

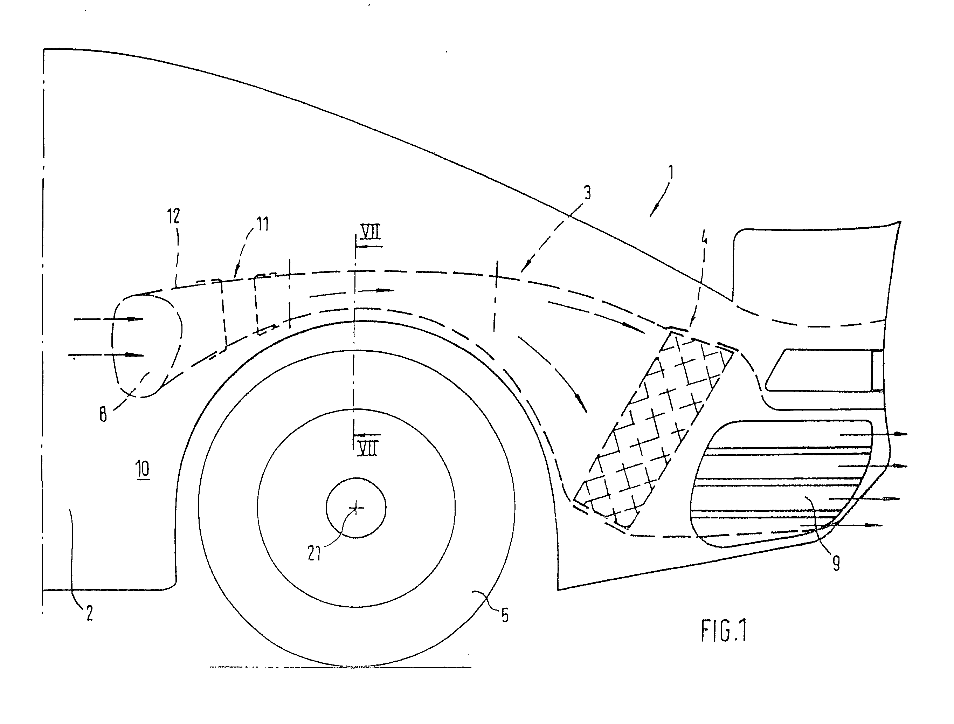

Im Heck 1 eines Fahrzeugs 2 ist an jeder Fahrzeugseite ein Zuluftkanal 3 mit Ladeluftkühler 4 vorgesehen. Der Kanal ist rohrförmig in Kunststoff ausgeführt. Er erstreckt sich oberhalb eines Hinterrades 5 im Radhaus 6 des Aufbaus 7 und ist vorzugsweise einstückig ausgeführt. Über eine aufbauseitige Lufteintrittsöffnung 8 und eine äussere Luftaustrittsöffnung 9 in der Karosserieseitenwand 10 wird Luft zum Ladeluftkühler 4 geführt und hinter diesem nach aussen abgeleitet, wie die Pfeile in Fig. 1 näher zeigen.

Der Zuluftkanal 3 ist an seiner Lufteintrittsseite 3a über eine Verbindungshülse 11 mit einem wandseitigen Einlassstutzen 12 verbunden, der die aufbauseitige Lufteintrittsöffnung 8 bildet. Diese Hülse 11 umfasst zwei Halbschalen 13, 14, die die endseitigen Bereiche des Einlassstutzens 12 und des rohrförmigen Zuluftkanals 3 verbindend umgreifen. Eine Verspannung der Halbschalen 13, 14 erfolgt über eine Schraubverbindung 15. Die Hülse 11 weist ein Mittelstück 16 auf, das entsprechend den inneren Durchmessern D des Einlassstutzens 12 und des Zuluftkanals 3 eingezogen ist und somit eine durchgehende bündige Innenoberfläche gebildet wird. Es wäre auch denkbar, statt der Verbindungshülse 11 den Zuluftkanal 3 direkt am Einlassstutzen 12 zu befestigen, derart, dass er auf diesem geschoben wird und über eine Schelle oder dergleichen festgesetzt wird. Des weiteren wäre auch denkbar, dass der Stutzen und der Zuluftkanal endseitig Flansche aufweisen, die mittels Schraubmitteln gegeneinander gespannt werden.

Nahe der Luftaustrittsöffnung 9 ist der Ladeluftkühler 4 mit der Luftaustrittsseite 3b des Zuluftkanals 3 verbunden. Diese Luftaustrittsseite 3b weist eine rechteckige Ausformung 17 auf, die den Kühler 4 haltend umgreift, wie Fig. 4 in schematischer Weise zeigt.

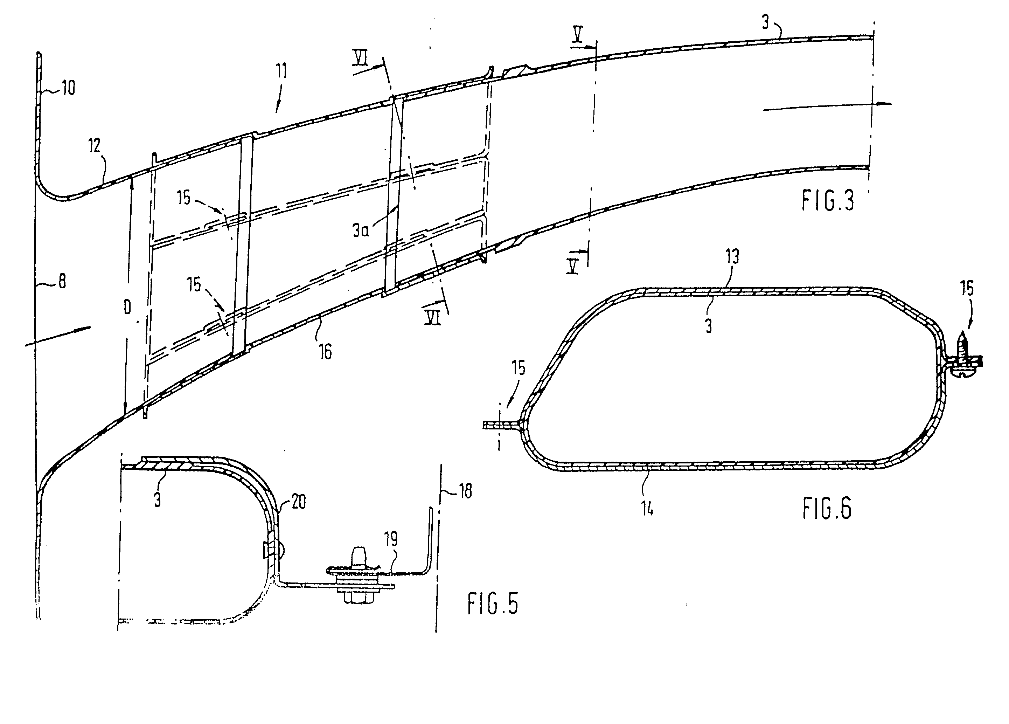

Der Ladeluftkühler 4 wird über mehrere Lager am Aufbau befestigt, wobei der Zuluftkanal, wie Fig. 5 näher zeigt, ebenfalls mit einer Aufbauwand 18 über Halter 19, 20 verbunden wird.

Der Zuluftkanal 3 ist trompetenförmig ausgebildet und nahe der horizontalen Wandung 7a des Aufbaus entlanggeführt. Er weist, bedingt durch seinen Verlauf, einen unterschiedlichen Querschnitt auf, ist aber im wesentlichen rechteckförmig ausgeformt, wie Fig. 6 zeigt.

Die aufbauseitige Lufteintrittsöffnung 8 ist etwa kreisförmig ausgeführt. Sie ist – in bezug auf die Fahrtrichtung F – vor dem Hinterrad 5 im Einzugsbereich des Kotflügels oberhalb der Raddrehachse 21 und vorzugsweise in einem Überdruckgebiet des Fahrzeugs vorgesehen.

Die Luftaustrittsöffnung 9 ist – in bezug auf die Fahrtrichtung – oberhalb des Hinterrades 5 in Höhe der Raddrehachse 21 angeordnet. Sie weist mehrere übereinander angeordnete Längsschlitze auf, die sich bis in die heckseitige Abschlusswand erstrecken. Vorzugsweise ist die Luftaustrittsöffnung 9 in einem Unterdruckbereich des Fahrzeugs vorgesehen.

## Patentansprüche

1. Fahrzeug mit einer im Heck angeordneten Brennkraftmaschine, die einen Abgasturbolader und einen Ladeluftkühler des Abgasturboladers aufweist und mit einem Zuluftkanal für den Ladeluftkühler versehen ist, wobei der Zuluftkanal (3) im Kotflügelbereich des Fahrzeugs angeordnet ist und einen in der Karosserie gehaltenen und mit einer aufbauseitigen Lufteintrittsöffnungen (8) versehenen Einlassstutzen (12) umfasst, der über eine Verbindungshülse (11) mit einem weiteren trompetenförmig ausgebildeten Rohrelement verbunden ist, das im Radhaus (6) oberhalb des Hinterrades (5) gehalten wird und an dessen Luftaustrittsseite der Ladeluftkühler (4) befestigt ist, welcher an seiner Austrittsseite mit einer Luftaustrittsöffnung (9) der Karosserie (10) in Verbindung steht.

2. Fahrzeug nach Anspruch 1, dadurch gekennzeichnet, dass das Rohrelement einstückig ausgebildet ist und aus Kunststoff besteht.

3. Fahrzeug nach den Ansprüchen 1 oder 2, dadurch gekennzeichnet, dass die Verbindungshülse (11) zwei Halbschalen (13, 14) mit abgestellten Verbindungsflanschen umfasst und jede Halbschale (13, 14) einen Endbereich des Einlassstutzens (12) und des Zuluftkansls (3) verbindend umgreift.

4. Fahrzeug nach Anspruch 3, dadurch gekennzeichnet, dass ein Mittelstück (16) der Halbschalen (13, 14) eingezogen ist und eine vom Einlassstutzen (12) und zum Zuluftkanal (3) hin bündig verlaufende Innenfläche mit einem gleichen Durchmesser (D) aufweist.

5. Fahrzeug nach einem oder mehreren der vorgesehenen Ansprüche, dadurch gekennzeichnet, dass das Rohrelement an seiner Luftaustrittsseite (3b) eine rechteckförmige Ausformung (17) zur Aufnahme des Ladeluftkühlers (4) aufweist.

6. Fahrzeug nach einem oder mehreren der vorgesehenen Ansprüche, dadurch gekennzeichnet, dass das Rohrelement mehrere Halter (19, 20) aufweist, die mit einer Wand (18) der Aufbaustruktur des Fahrzeugs verbunden sind.

7. Fahrzeug nach Anspruch 1, dadurch gekennzeichnet, dass der Einlassstutzen (12) eine aufbauseitige Lufteintrittsöffnung (8) in der Karosserie-Seitenwand (10) des Fahrzeugsaufbaus aufweist, die etwa kreisförmig ausgeführt ist und – in bezug auf die Fahrtrichtung (F) – vor dem Hinterrad (5) im Einzugsbereich des Kotflügels oberhalb einer Raddrehachse (21) angeordnet ist.

8. Fahrzeug nach Anspruch 1, dadurch gekennzeichnet, dass die Luftaustrittsöffnung (9) des Zuluftkanals (3) – in bezug auf die Fahrtrichtung (F) – vor dem Hinterrad (5) in der Karosserie-Seitenwand (10) des Fahrzeugaufbaus und etwa in Höhe der Raddrehachse (21) angeordnet ist und mehrere übereinander angeordnete Längsschlitze umfasst, welche in einer dreieckförmigen Karosserieöffnung liegen.

## Claims

1. A vehicle with internal combustion engine which is arranged in the tail and which comprises an exhaust-gas turbo-supercharger and a supercharged air cooler of the exhaust-gas turbo-supercharger and which is provided with an air inlet conduit for the supercharged air cooler, the air inlet conduit (3) being arranged in the mudguard region of the vehicle and embracing an inlet connexion (12) which is held in the bodywork and is provided with air inlet openings (8) at the end adjacent the body and which is connected by way of a connexion sleeve (11) to a further tubular element which is constructed in the form of a trumped and which is held in the wheel housing (6) above the rear wheel (5) and at the air-outlet end of which is secured the supercharged air cooler (4) which is connected at its outlet end to an air-outlet opening (9) in the bodywork (10).

2. A vehicle according to Claim 1, characterized in that the tubular element is constructed in one piece and consists of plastics material.

3. A vehicle according to Claim 1 or 2, characterized in that the connexion sleeve (11) embraces two half shells (13, 14) with projecting connexion flanges and each half shell (13, 14) engages over an end region of the inlet connexion (12) and the air inlet conduit (3) in a connecting manner.

4. A vehicle according to Claim 3 characterized in that an intermediate member (16) of the half shells (13, 14) is reduced and comprises a flush inner face extending from the inlet connexion (12) towards the air inlet conduit (3) and having an equal diameter (D).

5. A vehicle according to one or more of the preceding Claims, characterized in that the tubular element is provided at its air-outlet end (3b) with a rectangular enlargement (17) for receiving the supercharged air cooler (4).

6. A vehicle according to one or more of the preceding Claims, characterized in that the tubular element comprises a plurality of holders (19, 20) which are connected to a wall (18) of the bodywork structure of the vehicle.

7. A vehicle according to Claim 1, characterized in that the inlet connexion (12) comprises an air-inlet opening (8) at the end adjacent the body in the side wall (10) of the vehicle bodywork, which is made approximately circular and – relative to be direction of travel (F) – is arranged in front of the rear wheel (5) in the draw-in region of the mudguard above the axis of rotation (21) of a wheel.

8. A vehicle according to Claim 1, characterized in that the air-outlet opening (9) of the air inlet conduit (3) – relative to the direction of travel (F) – is arranged in front of the rear wheel (5) in the side wall (10) of the vehicle bodywork and approximately at the level of the axis of rotation (21) of the wheel and embraces a plurality of longitudinal slots which are arranged one above the other and which are situated in a triangular bodywork opening.

## Revendications

1. Véhicule avec un moteur à combustion interne disposé à l'arrière équipé d'un turbo compressor à gaz d'échapement et d'un radiateur pour l'air de suralimentation fourni par le turbo compresseur, avec un canal d'arrivée d'air pour le radiateur, ledit canal d'arrivée d'air (3) étant disposée dans la zone de garde-boue, avec une base d'admission (12) pourvue d'orifices d'admission d'air (8) du côte de la carrosserie, et relié au moyen d'un manchon de raccordement (11) à un autre élément tubulaire en forme de trompette, maintenu à l'intérieur du garde-boue (6) au dessus de la roue arrière (5), à la sortie duquel est fixé le radiateur (4) de l'air de suralimentation, dont la sortie est en communication avec un orifice de sortie de l'air (9) prévu dans la carrosserie (10).

2. Véhicule selon la revendication 1, caractérisé par le fait que l'élément tubulaire est réalisé d'une seule pièce et en matière synthétique.

3. Véhicule selon les revendications 1 ou 2, caractérisé par le fait que le manchon de raccordement (11) est constitué par deux demi-coquilles (13, 14) avec des brides de jonction décalées et que chacune des demi-coquille (13, 14) enrobe une zone d'extrémité de la base d'admission (12) et du canal d'arrivée d'air (3) réalisant ainsi la liaison entre les deux.

4. Véhicule selon la revendication 3, caractérisé par le fait qu'une partie médiane (16) des demi-coquilles (13, 14) est rétrécie, constituant ainsi une surface intérieure continue, s'étendant de la base d'admission (12) au canal d'arrivée d'air (3) avec un diamètre (D) constant.

5. Véhicule selon une ou plusieurs ces revendications ci-dessous, caractérisé par le fait qu'à sa sortie (3b) l'élément tubulaire comporte un évasement (17) de forme quadrangulaire pour recevoir le radiateur (4) de l'air de suralimentation.

6. Véhicule selon une ou plusieurs des revendications ci-dessus, caractérisé par le fait que l'élément tubulaire comporte un certain nombre de pattes supports (19, 20), qui sont réunies à une paroi (18) de la structure carrosserie du véhicule.

7. Véhicule selon la revendication 1, caractérisé par le fait que la base d'admission (12) comporte, du côté de la carrosserie, un orifice d'entrée d'air (8) pratiqué dans la paroi latérale (10) de la carrosserie du véhicule, réalisé avec une forme approximativement circulaire et qui, dans le sens de déplacement (F) du véhicule est disposé en avant de la roue arrière (5), dans la «zone d'attaque» de garde-boue, au dessus de l'axe de rotation de la roue (21).

8. Véhicule selon la revendication 1, caractérisé par le fait que l'orifice de sortie d'air (9) du canal d'arrivée d'air (3) est disposé, dans le sens de déplacement (F) du véhicule, dans la paroi latérale (10) de la carrosserie en arrière de la roue arrière (5) et approximativement à la hauteur de l'axe de rotation (21) de la roue, et qu'il comprend un certain nombre de fentes longitudinales disposées les unes au dessus des autres, groupées dans un orifice de forme triangulaire pratiqué dans la carrosserie.

FIG.1

FIG.2

EP 0 175 939 B1

FIG.3

FIG.5

FIG.6

FIG.4

3

4

3b

17

7a    3

6

7

5

FIG.7